# EUROPÄISCHE PATENTSCHRIFT

(11) **EP 3 864 362 B1**
(45) Veröffentlichungstag und Bekanntmachung des Hinweises auf die Patenterteilung: **07.06.2023**
(21) Anmeldenummer: 19787187.4
(22) Anmeldetag: 09.10.2019
(51) Int. Cl.: F28C 1/14, F24F 3/14, F24F 5/00, F28D 1/02, F28D 1/04, F28D 5/00, F28F 25/04, F28F 25/06, F28F 25/08

(54) **WÄRMETAUSCHEREINRICHTUNG MIT ADIABATISCHEM LUFTKÜHLER**
HEAT EXCHANGER DEVICE WITH ADIABATIC AIR COOLER
DISPOSITIF ÉCHANGEUR DE CHALEUR DOTÉ D'UN REFROIDISSEUR D'AIR ADIABATIQUE

(30) Priorität: 12.10.2018 DE 102018125278
(43) Veröffentlichungstag der Anmeldung: 18.08.2021
(73) Patentinhaber: Jaeggi HybridTechnologie AG, 4051 Basel (CH)
(72) Erfinder: CHIARADIA, Nicolas, 4142 Münchenstein (CH); SCHAUB, Tobias, 4102 Binningen (CH); ROSADO, Jorge, 81671 München (DE); MESTAN, Stephan, 82205 Gilching (DE); ODRICH, Thomas, 4493 Wenslingen (CH)
(74) Vertreter: Charrier Rapp & Liebau
(86) Internationale Anmeldenummer: PCT/EP2019/077375
(87) Internationale Veröffentlichungsnummer: WO 2020/074587

(56) Entgegenhaltungen:
- EP-A1- 3 306 247
- WO-A1-2010/037164
- CH-A5- 692 759
- DE-U1-202017 102 138

## Beschreibung

Die Erfindung betrifft eine Wärmetauschereinrichtung nach dem Oberbegriff des Anspruchs 1.

Eine gattungsgemäße Wärmetauschereinrichtung, die beispielsweise in Kälteanlagen als Rückkühler zur Kühlung eines Kühlfluids oder in Verflüssigern zur Verflüssigung eines Kältemittels eingesetzt werden kann, ist aus der DE 20 2017 102 138 U1 bekannt. Diese Wärmetauschereinrichtung umfasst einen mit dem Kühlfluid oder dem Kältemittel beaufschlagbaren Wärmeaustauscher, über den aus der Umgebung angesaugte Luft geleitet wird, um das im Wärmeaustauscher zirkulierende Kühlfluid zu Kühlen oder ein darin zirkulierendes Kältemittel zu verflüssigen. Hierfür umfasst der Wärmeübertrager ein Rohrleitungssystem, bspw. in Form gebogener Rohrleitungen, die von dem Kühlfluid bzw. dem Kältemittel durchströmt werden, wobei zur Verbesserung der Wärmeübertragung an den Rohrleitungen Lamellen aus einem thermisch leitenden Material angeordnet sind, um die wirksame Wärmeaustauschfläche zu erhöhen. Zum Ansaugen von Umgebungsluft ist in der Wärmetauschereinrichtung wenigstens ein Ventilator vorgesehen, der Luft aus der Umgebung ansaugt und durch den Wärmeübertrager leitet.

Um auch bei hohen Außentemperaturen eine ausreichende Kühlung des Kühlfluids bzw. ein Abkühlen des im Wärmeaustauscher zirkulierenden Kältemittels unterhalb seiner Verflüssigungstemperatur zu gewährleisten, weisen die aus dem Stand der Technik bekannten Rückkühler und Verflüssiger einen stromaufwärts des Wärmeübertragers angeordneten adiabatischen Luftkühler auf, in dem die angesaugte Luft zunächst adiabatisch vorgekühlt und anschließend über den Wärmeaustauscher zum Wärmeaustausch mit dem darin zirkulierenden Fluid geleitet wird. In dem adiabatischen Luftkühler wird die angesaugte Luft durch ein mit einer Flüssigkeit, insbesondere Wasser, befeuchtetes Mittel, das bspw. aus wasseraufnehmenden Matten gebildet ist, geleitet und dadurch adiabatisch gekühlt. In der Wärmetauschereinrichtung der DE 20 2017 102 138 A1 ist hierfür ein adiabatischer Luftkühler vorgesehen, der austauschbare Matten aus einem Feuchtigkeit absorbierenden Material aufweist und mittels einer Flüssigkeitszuführung mit einer Flüssigkeit, insbesondere Wasser, befeuchtet wird. Die von dem Ventilator aus der Umgebung angesaugte Luft wird zunächst durch den adiabatischen Luftkühler geführt und dabei durch Verdunstungskühlung vorgekühlt und anschließend über den Wärmeübertrager zum Wärmeaustausch mit dem darin geführten Fluid geleitet.

Häufig sind in den bekannten Wärmetauschereinrichtungen mit adiabatischen Luftkühlern zwei Wärmeübertrager angeordnet, die beispielsweise vertikal stehend in einem Abstand zueinander gegenüberliegend oder V-förmig zueinander angeordnet sind. Dabei ist jedem Wärmeübertrager ein adiabatischer Luftkühler zugeordnet und stromaufwärts des zugeordneten Wärmeübertragers angeordnet, wobei die Matten des adiabatischen Luftkühlers parallel oder auch unter einem Winkel zur Anströmfläche des jeweils zugeordneten Wärmeübertragers verlaufen können.

Wenn gemäß diesem Konstruktionsprinzip der bekannten Wärmetauschereinrichtungen eine Wärmetauschereinrichtung mit höherer Leistung bereitgestellt werden soll, kann die Anströmfläche der einander gegenüberliegend angeordneten Wärmeübertrager und entsprechend die Fläche der Matten des adiabatischen Luftkühlers erhöht werden. Bei einer Vergrößerung der Ausdehnung der Matten des adiabatischen Luftkühlers in vertikaler Richtung ergeben sich jedoch in Bezug auf die Stabilität und die Handhabbarkeit der Matten Probleme, weil zu hohe Matten bei vollständiger Durchfeuchtung instabil werden und bei einem Austausch der Matten durch eine Bedienperson nicht mehr handhabbar sind. Diese Probleme in Bezug auf Instabilität und schwieriger Handhabbarkeit beim Austausch der Matten ergeben sich beispielsweise ab einer Mattenhöhe von 2 m oder mehr. Darüber hinaus kann es bei zu hohen Matten zu einer starken Übersättigung der Matte mit der Befeuchtungsflüssigkeit im oberen Mattenbereich kommen, da eine größere Matte mit einer höheren Flüssigkeitsmenge befeuchtet werden muss, wenn sichergestellt werden soll, dass die Matte vollständig über ihre gesamte Höhe befeuchtet werden soll. Eine Übersättigung der Matte in ihrem oberen Bereich mit der Befeuchtungsflüssigkeit kann dazu führen, dass die Befeuchtungsflüssigkeit in Form von Tropfen durch die vom Ventilator angesaugte Luft aus der Matte herausgezogen wird. Dadurch sinkt die Effizienz der Befeuchtung der Matten und es können Korrosionsprobleme in der Wärmetauschereinrichtung auftreten, weil die aus den Matten austretenden Flüssigkeitstropfen an korrosionsanfälligen Bauteilen der Wärmetauschereinrichtung anhaften können.

Hiervon ausgehend liegt der Erfindung die Aufgabe zugrunde, eine gattungsgemäße Wärmetauschereinrichtung so weiter zu bilden, dass ohne eine Verschlechterung der Stabilität und der Handhabbarkeit der Matten und ohne eine Übersättigung der Matten in ihrem oberen Bereich mit der Befeuchtungsflüssigkeit eine möglichst gleichmäßige Benetzung der Matten sowie eine höhere Wärmeaustauschleistung ermöglicht wird.

Diese Aufgabe wird mit einer Wärmetauschereinrichtung mit den Merkmalen des Anspruchs 1 gelöst. Bevorzugte Ausführungsformen dieser Wärmetauschereinrichtung können den abhängigen Ansprüchen entnommen werden.

Die erfindungsgemäße Wärmetauschereinrichtung umfasst mindestens einen von einem Fluid durchflossenen Wärmeübertrager, mindestens einen Ventilator und mindestens einen adiabatischen Luftkühler zur Kühlung von Luft, die von dem Ventilator aus der Umgebung angesaugt wird, wobei die angesaugte Luft zunächst durch den Luftkühler und anschließend durch den Wärmeübertrager geleitet wird und der adiabatische Luftkühler mindestens ein in dem Luftkühler angeordnetes Befeuchtungsmittel aus einem Feuchtigkeit aufnehmenden Material sowie eine Flüssigkeitszuführung aufweist, welche dem Befeuchtungsmittel eine Flüssigkeit zuführt, um das Befeuchtungsmittel feucht zu halten, wobei erfindungsgemäß das Befeuchtungsmittel wenigstens zwei übereinander angeordnete Matten umfasst und die Flüssigkeitsvorrichtung eine oberhalb jeder Matte angeordnete Verteilereinrichtung aufweist, welche an eine Zufuhrleitung angeschlossen ist, über welche die Verteilereinrichtung mit der Flüssigkeit beaufschlagt wird, und welche die Flüssigkeit gleichmäßig auf der ihr zugeordneten Matte verteilt.

In der erfindungsgemäßen Wärmetauschereinrichtung ist demgemäß jedem Wärmeübertrager ein adiabatischer Luftkühler zugeordnet, der über ein Befeuchtungsmittel verfügt, welches sich aus wenigstens zwei Matten zusammensetzt, die übereinander angeordnet sind, wobei jeder Matte eine mit der Zufuhrleitung in Verbindung stehende Verteilereinrichtung zur gleichmäßigen Verteilung der Flüssigkeit auf der jeweiligen Matte zugeordnet und hierfür oberhalb der zugeordneten Matte angeordnet ist. Dadurch, dass jeder Matte eine eigene Verteilereinrichtung zugeordnet ist, kann eine gleichmäßige Benetzung jeder Matte mit der Flüssigkeit sowohl über ihre gesamte Dicke als auch über ihre gesamte Höhe erzielt werden. Weiterhin bleibt das Befeuchtungsmittel durch die Unterteilung in wenigstens zwei übereinander angeordnete Matten leichter handhabbar, bspw. bei einem Austausch der Matten. Somit können Wärmetauschereinrichtungen mit höherer Leistung realisiert werden, ohne Einbußen in Bezug auf eine gleichmäßige Benetzung und eine leichte Handhabbarkeit des Befeuchtungsmittels in Kauf nehmen zu müssen.

Die Befeuchtungsmittel der erfindungsgemäßen Wärmetauschereinrichtung können dabei vertikal stehend angeordnet sein, so dass die Mittelebene der Befeuchtungsmittel (bzw. die Anströmfläche der Matten, durch die die angesaugte Luft strömt) entlang der vertikalen Richtung verläuft. Eine vertikale Anordnung der Befeuchtungsmittel ist insbesondere bei einer vertikalen Orientierung der flächig ausgebildeten Wärmeübertrager zweckmäßig. Bei einer vertikalen Anordnung der Befeuchtungsmittel sind die Matten, aus denen sich das Befeuchtungsmittel zusammensetzt, vertikal übereinander und miteinander fluchtend angeordneten und erstrecken sich entlang einer Mattenebene (Mittelebene der Matte). Wenn die Wärmeübertrager dagegen geneigt zur Vertikalen orientiert sind, wie dies beispielsweise bei Wärmetauschereinrichtungen mit zwei V-förmig zueinander angeordneten Wärmeübertragern der Fall ist, sind auch die den Wärmeübertragern zugeordneten Befeuchtungsmittel zweckmäßig zur Vertikalen geneigt, bevorzugt unter demselben Winkel, und verlaufen damit bevorzugt parallel zur Anströmfläche der schräg stehenden Wärmeübertrager. In diesem Fall verläuft die (Mittel-)Ebene der Matten des Befeuchtungsmittels ebenfalls schräg zur vertikalen Richtung. Es ist jedoch auch möglich, z.B. eine untere Matte schräg zur Vertikalen verlaufend und eine obere Matte vertikal stehend darüber anzuordnen.

Um die Flüssigkeit, welche den Verteilereinrichtungen über die Zufuhrleitung zugeführt wird, gleichmäßig auf die jeder Verteilereinrichtung zugeordnete Matte verteilen zu können, weist jede Verteilereinrichtung ein Verteilerorgan auf, das die Flüssigkeit gleichmäßig auf eine Oberseite der zugeordneten Matte verteilt. Die Verteilereinrichtungen können beispielsweise als flüssigkeitsdurchlässige, die Flüssigkeit führende Rohr- oder Schlauchleitungen ausgebildet sein. Die Verteilereinrichtungen können insbesondere die Form eines Perlschlauchs aus einem porösen Material oder eines perforierten Schlauchs aufweisen. Die Verteilereinrichtungen können auch perforierte Rohrleitungen oder Rohrleitungen mit einer Mehrzahl von Öffnungen oder Düsen aufweisen, über welche die Flüssigkeit auf die Oberseite der zugeordneten Matte gesprüht oder geträufelt wird. Weiterhin können die Verteilereinrichtungen auch andere Verteilerorgane aufweisen, wie z.B. ein Verteilerblech mit gleichmäßig über das Verteilerblech verteilten Öffnungen umfassen, durch welche die Flüssigkeit auf die Oberseite der zugeordneten Matte fließen kann.

Zur Erleichterung eines Austauschs der Matten sind diese zweckmäßig austauschbar in einem Luftkühlergehäuse angeordnet. Das Luftkühlergehäuse weist in einem zweckmäßigen Ausführungsbeispiel der Erfindung einen als Auffangwanne oder -rinne ausgebildetes Bodenteil, mindestens zwei senkrecht zum Bodenteil stehende Seitenteile sowie mindestens eine erste (mittlere) Querstrebe und eine zweite (obere) Querstrebe auf. Das Bodenteil sowie die Querstreben erstrecken sich dabei in der Längsrichtung der Wärmetauschereinrichtung. Zwischen dem Bodenteil und der ersten (mittleren) Querstrebe ist dabei eine erste Matte und zwischen der ersten (mittleren) Querstrebe und der zweiten (oberen) Querstrebe ist eine zweite Matte angeordnet. Oberhalb der ersten Matte ist dabei eine erste Verteilereinrichtung und oberhalb der zweiten Matte ist eine zweite Verteilereinrichtung angeordnet. Somit ist jeder Matte eine Verteilereinrichtung zugeordnet, mit der die Flüssigkeit auf die Oberseite der jeweils zugeordneten Matte aufgegeben werden kann. Die der ersten Matte zugeordnete erste Verteilereinrichtung ist dabei zweckmäßig und zur Erzielung eines einfachen Aufbaus in der ersten (mittleren) Querstrebe untergebracht und die zweite Verteilereinrichtung, welche der zweiten Matte zugeordnet ist, ist in der zweiten (oberen) Querstrebe untergebracht. Die Querstreben bilden dabei zweckmäßig ein Gehäuse für die Verteilereinrichtungen und sind hierfür bspw. als quaderförmiges Gehäuse mit einem Boden, einem Deckel und zwei Seitenwänden ausgestaltet. Bevorzugt weist dabei der Boden jeder Querstrebe Durchlässe auf, durch welche die Flüssigkeit hindurchtreten kann, um auf die jeweils darunter angeordnete Matte zu gelangen. Die erste (mittlere) Querstrebe weist zweckmäßig auch im Deckel Durchlässe auf, so dass die von der darüber angeordneten (zweiten) Matte herausfließende, überschüssige Flüssigkeit durch diese Durchlässe auf die darunterliegende (erste) Matte gelangen kann. Dadurch wird verhindert, dass sich überschüssige Flüssigkeit, die durch eine obere Matte von oben nach unten hindurchgeflossen ist, im Bereich der Querstreben aufstaut.

Vorteilhaft sind die Querstreben, zwischen denen sich die Matten erstrecken, mit einem Aufnahmebereich versehen, in dem eine Unterseite und/oder eine Oberseite einer Matte aufgenommen werden kann. Der Aufnahmebereich einer Querstrebe kann dabei beispielsweise durch ein im Querschnitt U-förmiges Profil ausgebildet sei. Eine einfache und kostengünstige Herstellung der Querstreben wird beispielsweise bei Ausbildung der Querstreben als U-förmige Blechteile erzielt. Die erste (mittlere) Querstrebe weist bevorzugt ein Doppel-U-Profil auf, in dem sowohl die Oberseite der ersten (unteren) Matte als auch die Unterseite der zweiten (oberen) Matte aufgenommen werden kann.

Die Verteilereinrichtungen verlaufen zweckmäßig in der Ebene der jeweils zgeordneten Matte des Befeuchtungsmittels, insbesondere in der Mittelebene der jeweiligen Matte. Es ist jedoch auch möglich, das die Verteilereinrichtungen versetzt zur Mittelebene der Matte angeordnet sind. Eine gleichmäßige Durchfeuchtung der Matten ergibt sich jedoch bei einer Anordnung der Verteilereinrichtung in der Mittelebene der zugeordneten Matte. Die Verteilereinrichtungen können dabei auch mehrere Leitungen oder Schläuche umfassen, die im Abstand und parallel zueinander sowie parallel zur Mittelebene der Matte verlaufen. Eine Anordnung von mehreren Leitungen oder Schläuchen oberhalb der Matte stellt eine gleichmäßige Befeuchtung der Matte über ihre gesamte Dicke sicher.

Die Verteilereinrichtungen stehen zur Versorgung mit der Flüssigkeit zweckmäßig über einen Verteiler mit der Zufuhrleitung in Verbindung. Bei Verwendung von mehreren Leitungen oder Schläuchen wird ein Mehrfachverteiler eingesetzt, der die Flüssigkeit gleichmäßig auf die einzelnen Leitungen oder Schläuche verteilt. Die Zufuhrleitung ist zweckmäßig mit einer Pumpe gekoppelt, welche eine Flüssigkeit, bspw. Wasser, unter Druck zu den Verteilereinrichtungen fördert. Vorteilhaft können die einzelnen Verteilereinrichtungen unabhängig voneinander selektiv angesteuert werden. Dies ermöglicht, dass nur einzelne Matten des Befeuchtungsmittels mit der Flüssigkeit befeuchtet werden. Eine selektive Befeuchtung von nur einzelnen Matten des Befeuchtungsmittels ermöglicht den Betrieb der Wärmetauschereinrichtung und des adiabatischen Luftkühlers in einer Teillast, beispielsweise in der Übergangszeit im Herbst und im Frühling. Durch Betrieb des adiabatischen Luftkühlers in einer Teillast kann bei einer selektiven Ansteuerung der Verteilereinrichtungen mit einer Befeuchtung von nur einzelnen Matten die Ausbildung von Sedimenten am Boden der Matten verhindert werden. Darüber hinaus kann bei Betrieb der adiabatischen Luftkühler in einer Teillast Flüssigkeit für die Befeuchtung des Befeuchtungsmittels gespart werden, wenn nur einzelne Matten des Befeuchtungsmittels feucht gehalten werden.

Die einzelnen Matten können sich aus mehreren Mattenabschnitten zusammensetzen, wobei die Mattenabschnitte jeweils in der Mittelebene der Matte verlaufend entweder in Längsrichtung des Luftkühlers auf Stoß nebeneinander und/oder senkrecht zur Längsrichtung übereinander angeordnet sein. Bei einer vertikalen Orientierung des Befeuchtungsmittels bzw. der Matten können sich die vertikal übereinander angeordneten Matten dementsprechend sowohl aus in Längsrichtung des Luftkühlers nebeneinander als auch in vertikaler Richtung übereinander angeordneten Mattenabschnitte zusammensetzen. Die Mattenabschnitte, die dabei eine Matte bilden, sind zweckmäßig miteinander fluchtend nebeneinander bzw. übereinander auf Stoß angeordnet. Die Zusammensetzung der Matten aus mehreren Mattenabschnitten erleichtert die Handhabung der Matten beispielsweise bei einem Austausch einer verschlissenen Matte gegen eine neue Matte oder bei Herausnahme der Matten für den Winterbetrieb, in dem der adiabatische Luftkühler nicht benötigt wird.

Durch die erfindungsgemäße Zuordnung einer Verteilereinrichtung zu jeder Matte kann sichergestellt werden, dass jede Matte ausreichend mit Flüssigkeit versorgt wird, um eine gleichmäßige Benetzung der Matten mit der Flüssigkeit zu gewährleisten. Dabei ist es nicht erforderlich, den oberen Bereich der Matten oder die in vertikaler Richtung oben liegenden Matten übermäßig mit der Flüssigkeit zu übersättigen. Dadurch wiederum kann verhindert werden, dass überschüssige Flüssigkeit durch die vom Ventilator erzeugte, zur Wärmetauschereinrichtung nach innen gerichtete Luftströmung Flüssigkeitstropfen der überschüssigen Flüssigkeit aus dem oberen Bereich der Matten herauszieht und in das Innere der Wärmetauschereinrichtung transportiert, wo die Flüssigkeitstropfen Probleme in Bezug auf Korrosion hervorrufen könnten.

Die in der erfindungsgemäßen Wärmetauschereinrichtung angeordneten Wärmeübertrager können durch die erfindungsgemäße Zusammensetzung des Befeuchtungsmittels aus wenigstens zwei übereinander angeordnete Matten in eine der Anzahl der Matten entsprechende Anzahl von vertikal übereinander angeordnete Wärmeübertragerabschnitte unterteilt sein, wobei jeder Wärmeübertragerabschnitt ein von den anderen Wärmeübertragerabschnitten isoliertes Rohrleitungssystem aufweist, durch welche das Fluid strömt, das mit der durch den Wärmeübertrager geleiteten Luft im Wärmeaustausch steht. Bei dieser bevorzugten Ausführung der erfindungsgemäßen Wärmetauschereinrichtung ist jedem Wärmeübertragerabschnitt eine Matte derart zugeordnet, dass die vom Ventilator aus der Umgebung angesaugte Luft zunächst durch die jeweilige Matte und anschließend durch den ihr zugeordneten Wärmeübertragerabschnitt strömt. Durch diese Zuordnung eines Wärmeübertragerabschnitts und einer zugehörigen Matte kann die gesamte Wärmetauschereinrichtung in einer Teillast betrieben werden, indem beispielsweise nur der untere Wärmeübertragerabschnitt betrieben und die diesem zugeordnete untere Matte mit Flüssigkeit befeuchtet wird und der obere Wärmeübertragerabschnitt und die diesem zugeordnete obere Matte nicht betrieben werden. Dadurch kann die Effizienz der Wärmetauschereinrichtung in der Übergangszeit im Herbst und im Frühling verbessert werden.

Diese und weitere Vorteile und Merkmale der Erfindung ergeben sich aus den nachfolgend unter Bezugnahme auf die begleitenden Zeichnungen näher beschriebenen Ausführungsbeispielen. Die Zeichnungen zeigen:
- **Fig. 1:**: Perspektivische Darstellung einer ersten Ausführungsform einer erfindungsgemäßen Wärmetauschereinrichtung;
- **Fig. 2:**: Darstellung der Ausführungsform einer erfindungsgemäßen Wäremetauschereinrichung gern. Figur 1 mit herausgenommenen Befeuchtungsmitteln, wodurch die in der Wärmetauschereinrichtung angeordneten Wärmeübertrager sichtbar sind;
- **Fig. 3a:**: Detaildarstellung eines Abschnitts des adiabatischen Luftkühlers der erfindungsgemäßen Wärmetauschereinrichtung von Figur 1;
- **Fig. 3b:**: Detaildarstellung des adiabatischen Luftkühlers von Figur 3a im Bereich einer Verteilereinrichtung zur Verteilung der Flüssigkeit auf die darunter angeordnete Matte;
- **Fig. 4a:**: Detaildarstellung einer oberen Verteilereinrichtung des adiabatischen Luftkühlers von Figur 3a, wobei der Deckel einer oberen Querstrebe, in der diese Verteilereinrichtung angeordnet ist, zur besseren Darstellung weggenommen ist;
- **Fig. 4b:**: Detaildarstellung einer unteren Verteilereinrichtung des adiabatischen Luftkühlers von Figur 3a;
- **Fig. 4c:**: Schnittansicht der unteren Verteilereinrichtung von Figur 4b, wobei die Leitungen dieser Verteilereinrichtung zur besseren Darstellung nicht gezeigt sind;
- **Fig. 5:**: Schematische Darstellung der Flüssigkeitszuführung für die Befeuchtungsmittel der Wärmetauschereinrichtung von Figur 1;
- **Fig. 6:**: Perspektivische Darstellung einer zweiten Ausführungsform einer erfindungsgemäßen Wärmetauschereinrichtung.

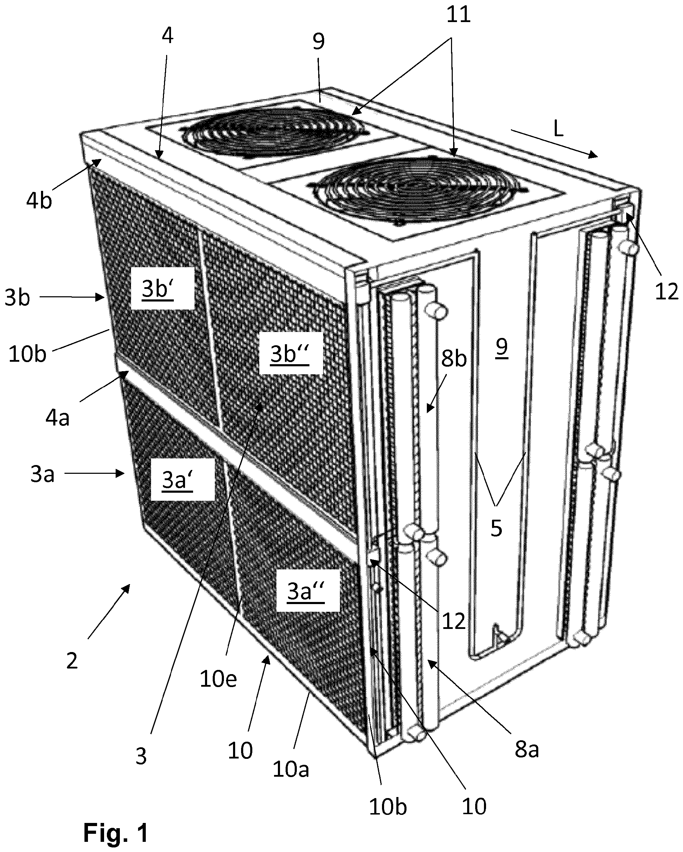

In Figur 1 ist eine erfindungsgemäße Wärmetauschereinrichtung in einer perspektivischen Ansicht gezeigt. Die Wärmetauschereinrichtung umfasst ein quaderförmiges Wärmetauschergehäuse 9, das zu seiner Mittellängsebene symmetrisch aufgebaut ist. In dem Wärmetauschergehäuse 9 sind jeweils in einer Seitenwand zwei Wärmeübertrager 1 gegenüberliegend angeordnet. Bei den beiden Wärmeübertragern 1 kann es sich beispielsweise um Lamellen-Wärmeübertrager (Rippenrohr-Wärmetauscher) oder um Rohrbündel-Wärmetauscher handeln. Jeder Wärmeübertrager 1 enthält ein Rohrleitungssystem mit einer Vielzahl von Rohrleitungen, die sich in Längsrichtung L des Wärmetauschergehäuses 9 erstrecken. Die beiden flächig ausgebildeten Wärmeübertrager 1 sind dabei in dem Wärmetauschergehäuse 9 einander gegenüberliegend und vertikal stehend angeordnet. Es ist jedoch auch möglich, dass die Wärmeübertrager 1 schräg zu Vertikalen stehend geneigt und von der Seite betrachtet V-förmig zueinander angeordnet sind.

Jeder Wärmeübertrager 1 setzt sich aus zwei vertikal übereinander angeordneten Wärmeübertragerabschnitten 1a, 1b zusammen, wobei die Wärmeübertragerabschnitte 1a, 1b voneinander getrennte Rohrleitungssysteme aufweisen, durch welche ein als Kühlmittel oder Kältemittel ausgebildetes Fluid geleitet wird. Hierfür ist jeder Wärmeübertragerabschnitt 1a, 1b mit einem Verteiler 8a, 8b verbunden, wobei jeder Verteiler 8a, 8b über einen Einlass 6a bzw. 6b und einen Auslass 7a, 7b verfügt. Über den Einlass 6a, 6b wird das Fluid in die Wärmeübertragerabschnitte 1a, 1b eingeleitet und von dem jeweiligen Verteiler 5a, 5b in den Rohrleitungen der Wärmeübertragerabschnitte 1a, 1b verteilt. Das Fluid zirkuliert in den Rohrleitungen der Wärmeübertragerabschnitte 1a, 1b und strömt bodenseitig durch den jeweiligen Auslass 7a, 7b des Verteilers 5a bzw. 5b heraus. Die Einlässe 6a, 6b und die Auslässe 7a, 7b sind mit hier nicht dargestellten Zufuhr- und Abfuhrleitungen verbunden, über die das Fluid zu- und abgeführt wird.

Jedem Wärmeübertrager 1 der Wärmetauschereinrichtung von Figur 1 ist ein adiabatischer Luftkühler 2 zugeordnet, wobei die Luftkühler 2 in seitlichen Lufteingangsöffnungen des Wärmetauschergehäuses 9 angeordnet sind. Jeder Luftkühler 2 enthält ein sich entlang einer Ebene erstreckendes Befeuchtungsmittel 3 aus einem Feuchtigkeit aufnehmenden Material, sowie eine Flüssigkeitszuführung 4, über die dem Befeuchtungsmittel 3 eine Flüssigkeit, insbesondere Wasser, zugeführt wird, um das Befeuchtungsmittel 3 feucht zu halten. Die Matten 3a, 3b sind jeweils aus einem Flüssigkeit aufnehmenden Material, bspw. aus gewellten Pappe- oder Papierbahnen oder aus einem Block aus Zellulose oder einem offenporigen Schaummaterial gebildet.

Unter der Ebene des Befeuchtungsmittel 3, in der sich die Matten 3a, 3a, erstrecken, wird dabei die Mittelebene der eben bzw. plattenförmig ausgebildeten Matten verstanden. Die Ebene, in der sich das Befeuchtungsmittel 3 erstreckt, verläuft in dem gezeigten Ausführungsbeispiel vertikal und steht parallel zur Anströmfläche des zugeordneten Wärmeübertrager 1.

Das Befeuchtungsmittel 3 ist aus zwei in der Ebene verlaufende und miteinander fluchtend, vertikal übereinander angeordnete Matten 3a, 3b zusammengesetzt, wobei eine untere Matte 3a dem unteren Wärmeübertragerabschnitt 1a und eine obere Matte 3b dem oberen Wärmeübertragerabschnitt 1b in der Weise zugeordnet ist, dass die untere Matte 3a dem unteren Wärmeübertragerabschnitt 1a gegenüberliegend und die obere Matte 3b dem oberen Wärmeübertragerabschnitt 1b gegenüberliegend angeordnet ist.

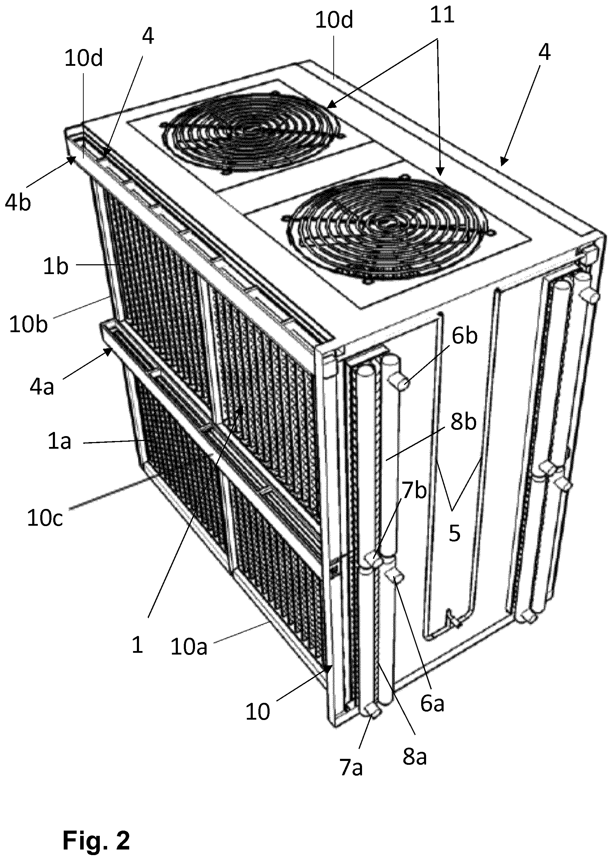

In Figur 2 sind die in Figur 1 gezeigten Matten 3a, 3b weggenommen, so dass die dahinterliegenden Wärmeübertragerabschnitte 1a, 1b sichtbar sind.

Die Flüssigkeitszuführung 4 weist eine oberhalb jeder Matte 3a, 3b angeordnete Verteilereinrichtung 4a, 4b zur gleichmäßigen Verteilung der Flüssigkeit auf den Matten 3a, 3b auf. Jede Verteilereinrichtung 4a, 4b ist an eine Zufuhrleitung 5 angeschlossen, über welche die jeweilige Verteilereinrichtung 4a, 4b mit der Flüssigkeit, insbesondere mit Wasser, versorgt wird.

An der Oberseite des Wärmetauschergehäuses 9 sind zwei Ventilatoren 11 in Öffnungen des Wärmetauschergehäuses 9 eingesetzt, wobei je ein Ventilator 11 zwischen den sich gegenüberliegenden Wärmeübertragern 1 platziert ist. Die Ventilatoren 11 saugen Umgebungsluft an und leiten diese zunächst durch die seitlich am Wärmetauschergehäuse 9 angeordneten Luftkühler 2 und von dort durch die seitlichen Lufteingangsöffnungen im Wärmetauschergehäuse 9 zwischen den Rohrleitungen der Wärmeübertrager 1 hindurch. Die angesaugte Luft wird dabei zunächst in den adiabatischen Luftkühlern 2 adiabatisch gekühlt und die gekühlte Luft nimmt beim Durchleiten durch die Wärmeübertrager 1 Wärme von dem darin zirkulierenden Fluid auf, wodurch das Fluid abgekühlt oder verflüssigt wird. Die durch den Wärmeaustausch mit dem Fluid in den Wärmeübertragern 1 erwärmte Luft wird durch die Ventilatoren 11 oberseitig aus dem Wärmetauschergehäuse 9 ausgeblasen.

Die beiden seitlich am Wärmetauschergehäuse 9 angeordneten Luftkühler 2 sind jeweils identisch aufgebaut, wobei jeder Luftkühler eine eigene Flüssigkeitszuführung 4 aufweist, die jeweils über eine Zufuhrleitung 5 an ein hier nicht dargestelltes Flüssigkeitsreservoir angeschlossen ist. Über eine ebenfalls nicht dargestellte Pumpeinrichtung wird die Flüssigkeit in die Leitung 5 gepumpt. Auf eine Pumpeinrichtung kann ggf. verzichtet werden, wenn die Flüssigkeit bereits aus dem Flüssigkeitsreservoir unter Druck bereitgestellt wird, wie dies z.B. bei Verwendung von Wasser aus der Trinkwasser- Hausleitung der Fall ist.

Die Flüssigkeitszuführung 4 umfasst eine separate Verteilereinrichtung 4a, 4b für jede der Matten 3a, 3b. Jeder Matte 3a, 3b ist also eine eigene Verteilereinrichtung 4a, 4b zugeordnet, wobei jede Verteilereinrichtung 4a, 4b ein Verteilerorgan umfasst, das die Flüssigkeit gleichmäßig auf eine Oberseite der der jeweiligen Verteilereinrichtung 4a, 4b zugeordneten Matte 3a, 3b verteilt. Die Verteilereinrichtungen 4a, 4b können bspw. als flüssigkeitsdurchlässige, die Flüssigkeit führende Rohr- oder Schlauchleitungen ausgebildet sein, insbesondere in Form eines Perlschlauchs aus einem porösen Material oder in Form einer Rohrleitung mit einer Mehrzahl von Öffnungen oder Düsen, durch welche die Flüssigkeit auf die Oberseite der darunterliegenden Matte 3a, 3b gelangen kann. Die von der Flüssigkeitszuführung 4 zugeführte Flüssigkeit tritt dabei durch die Öffnungen oder Düsen der Verteilereinrichtungen 4a, 4b auf die Oberseite der jeweils zugeordneten Matte 3a, 3b aus und fließt schwerkraftbedingt nach unten in das feuchtigkeitsabsorbierende Material der Matten 3a, 3b, wodurch diese befeuchtet werden. Dabei können zwischen den Rohr- oder Schlauchleitungen einer Verteilereinrichtung 4a, 4b und der Oberseite der zugeordneten Matte 3a, 3b weitere Verteilerorgane, wie z.B. ein Verteilerblech mit Öffnungen oder Durchlässen darin angeordnet sein.

Um die Matten 3a, 3b gleichmäßig über ihre gesamte Dicke mit Flüssigkeit zu versorgen, enthält jede Verteilereinrichtung 4a, 4b bevorzugt mehrere Leitungen, die sich horizontal in Längsrichtung L erstrecken und parallel sowie in Querrichtung (also senkrecht zur Längsrichtung L) über die Dicke der Matten 3a, 3b im Abstand zueinander angeordnet sind.

Jeder Luftkühler 2 umfasst ein seitlich am Wärmetauschergehäuse 9 befestigtes Luftkühlergehäuse 10 mit einem wannenförmigen Bodenteil 10a, das sich in horizontaler Richtung erstreckt, und zwei gegenüber dem Bodenteil 10a senkrecht stehenden Seitenteilen 10b. In dem Luftkühlergehäuse 10 sind die Matten 3a, 3b, die das Befeuchtungsmittel 3 bilden, austauschbar angeordnet. In dem in Figur 1 gezeigten Ausführungsbeispiel setzt sich das Befeuchtungsmittel 3 aus der unteren Matte 3a und der oberen Matte 3b zusammen. Bevorzugt ist dabei jede Matte 3a, 3b3a, 3b separat aus dem Luftkühlergehäuse 10 herausnehmbar.

Wie aus einem Vergleich der Figuren 1 und 2 ersichtlich wird, verläuft jede im Luftkühlergehäuse 10 eingesetzte Matte 3a, 3b parallel und in horizontaler Richtung senkrecht zur Längsrichtung L fluchtend zu dem jeweils zugeordneten flächigen Wärmeübertragerabschnitt 1a, 1b des Wärmeübertragers 1. Bei in das Luftkühlergehäuse 10 eingesetzten Matten 3a, 3b verläuft die Mattenebene (Mittellängsebene der Matten 3a und 3b) parallel zu dem vertikal orientierten Wärmeübertrager 1.

Überschüssige Flüssigkeit, die durch die Matten 3a, 3b durchgeflossen ist, ohne von dem Mattenmaterial aufgesaugt zu werden, fließt in das wannenförmige Bodenteil 10a des Luftkühlergehäuses 10 und wird dort gesammelt. Am wannenförmigen Bodenteil 10a sind Auslassstutzen angeordnet, über die die Flüssigkeit abgeführt werden kann, die sich in dem wannenförmigen Boden gesammelt hat.

Aus Figur 1 ist zu erkennen, dass jede Matte 3a, 3b aus zwei in Längsrichtung L nebeneinander angeordnete Mattenabschnitte 3a`, 3a" bzw. 3b`, 3b" zusammengesetzt ist. Die nebeneinander liegenden Mattenabschnitte 3a`, 3a" bzw. 3b`, 3b" sind dabei an ihren vertikal stehenden Seitenkanten auf Stoß zueinander angeordnet. Dabei kann zwischen den Stoßfugen von nebeneinanderliegenden Mattenabschnitte 3a`, 3a" bzw. 3b`, 3b" auch eine Vertikalstrebe 10e des Luftkühlergehäuses vorgesehen sein, wie in Figur 1 gezeigt. Es ist jedoch auch möglich, dass die Mattenabschnitte 3a`, 3a" bzw. 3b`, 3b" an ihren Seitenkanten ohne Zwischenraum auf Stoß aneinander anliegen.

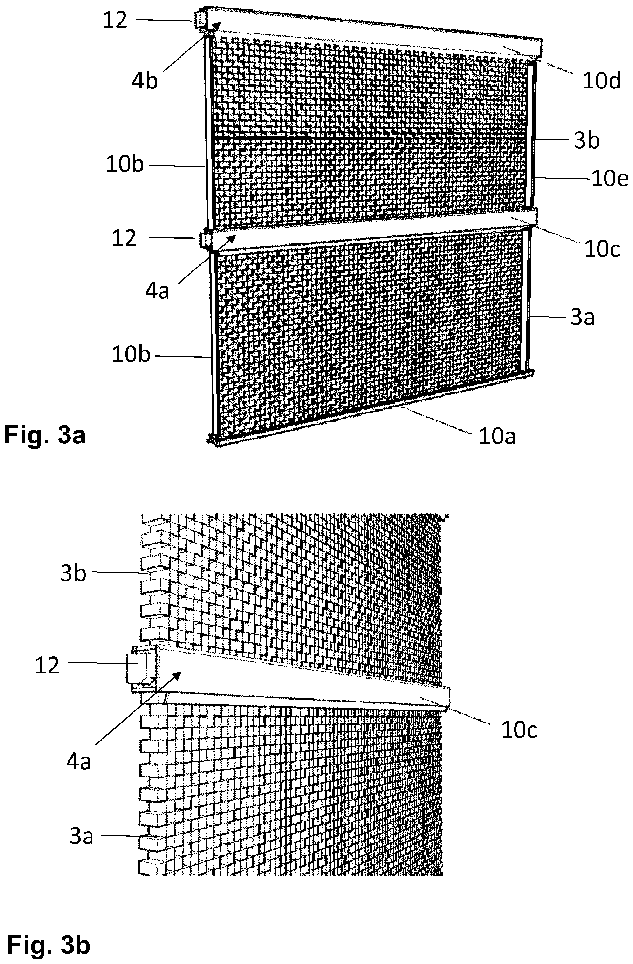

Der Aufbau des Luftkühlergehäuses 10 ist im Einzelnen aus den Figuren 1 und 2 sowie den Figuren 3a und 3b zu entnehmen. Wie aus den Figuren 1 und 2 ersichtlich, umfasst das Luftkühlergehäuse 10 neben dem Bodenteil 10a und den Seitenwänden 10b eine erste, mittlere Querstrebe 10c und eine zweite, obere Querstrebe 10d, wobei sich die Querstreben 10c, 10d in der Längsrichtung L erstrecken und parallel zum Bodenteil 10a verlaufen. Jede Querstrebe 10c, 10d bildet dabei eine Aufnahme für die Matten 3a bzw. 3b. Hierfür weisen die Querstreben 10c, 10d an ihrer Ober- bzw. Unterseite im Querschnitt U-förmige Profile auf, die bspw. aus einem Metallblech gebildet sein können. In die U-förmigen Profile der Querstreben 10c, 10d kann eine Unterseite bzw. eine Oberseite einer Matte 3a, 3b eingelegt werden. Die mittlere Querstrebe 10d enthält ein nach oben und ein nach unten weisendes U-förmiges Profil, um sowohl die Oberseite der unteren Matte 3a als auch die Unterseite der oberen Matte 3b aufnehmen zu können. Die U-förmigen Profile der Querstreben 10c, 10d ermöglichen einerseits eine sichere Fixierung der Matten 3a, 3b im Luftkühlergehäuses 10 und andererseits ein leichtes Herausnehmen der Matten 3a, 3b aus dem Luftkühlergehäuse 10.

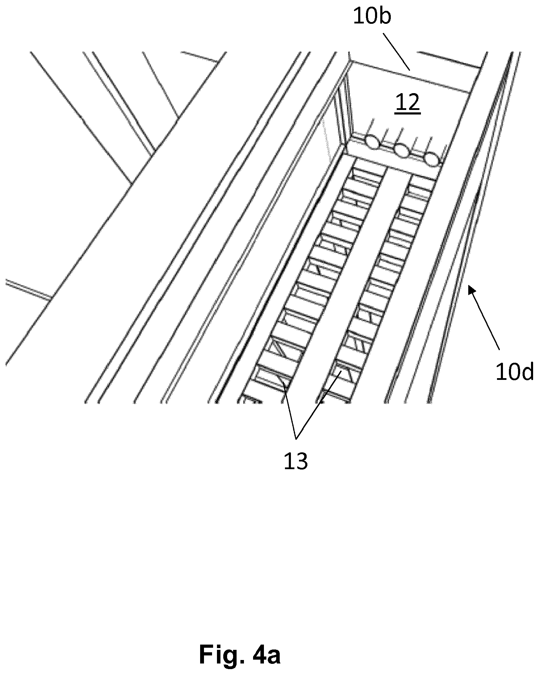

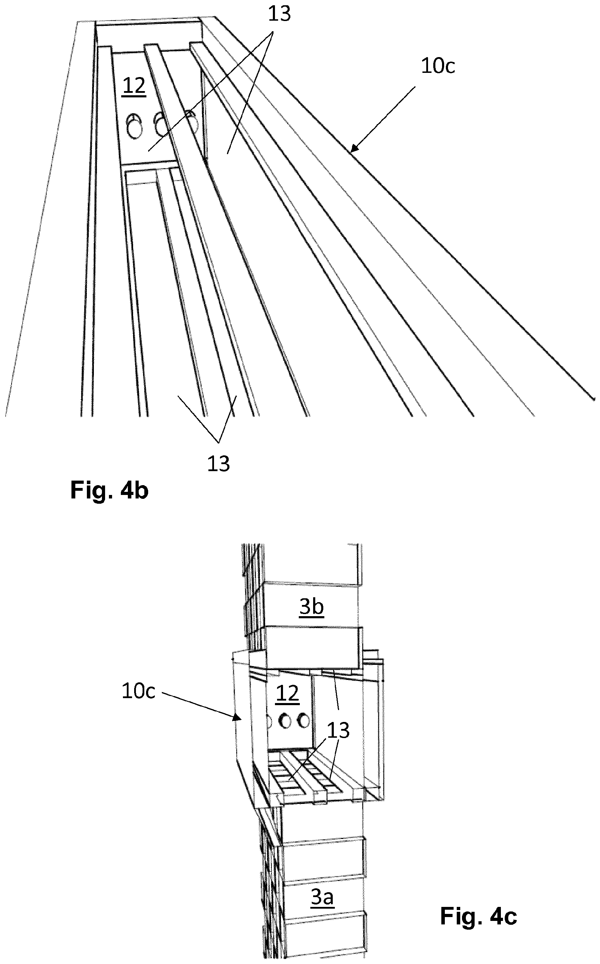

Wie aus den Figuren 4a, 4b und 4c entnehmbar, sind die Verteilereinrichtungen 4a, 4b in den Querstreben 10c, 10d untergebracht. Dadurch ist jede Verteilereinrichtung 4a, 4b oberhalb der ihr zugeordneten Matte 3a, 3b angeordnet. Hierfür sind die Querstreben 10c, 10d jeweils als kastenförmiges Gehäuse mit einem Boden und einen im Abstand und parallel zum Boden verlaufenden Deckel sowie zwei senkrecht zum Boden stehende Seitenwände ausgebildet, zwischen denen je eine Verteilereinrichtung 4a, 4b angeordnet ist. Der Boden der oberen Querstrebe 10d und der mittleren Querstrebe 10c weist dabei Durchlässe 13 auf, durch die Flüssigkeit hindurchtreten kann, die aus den Leitungen der jeweiligen Verteilereinrichtung 4a, 4b austritt (Figuren 4a und 4b). Die Durchlässe 13 können bspw. in der Form einer Perforation im Boden ausgebildet sein. Durch diese Durchlässe 13 kann die Flüssigkeit, die aus den Verteilereinrichtungen 4a, 4b strömt, durch die Querstreben 10c, 10d und auf die Oberseite der darunter angeordneten Mate 3a, 3b fließen. Bei der mittleren Querstrebe 10c sind entsprechende Durchlässe 13 auch im Deckel vorgesehen, so dass überschüssige Flüssigkeit, die durch die obere Matte 3b geflossen ist, durch diese Durchlässe 13 zunächst in die mittlere Querstrebe 10c und von dort wiederum durch die Durchlässe 13 in deren Boden auf die Oberseite der unteren Matte 3a fließen kann (Figur 4c).

Um die mehreren Leitungen einer Verteilereinrichtung 4a, 4b gleichmäßig mit der Flüssigkeit zu versorgen, weist jede Verteilereinrichtung 4a, 4b einen Mehrfachverteiler 12 auf, an den die Leitungen der Verteilereinrichtung 4a, 4b angeschlossen sind (Figuren 4a, 4b und 4c). Eine Zuleitung des Mehrfachverteilers 12 ist wiederum an die Zufuhrleitung 5 angeschlossen.

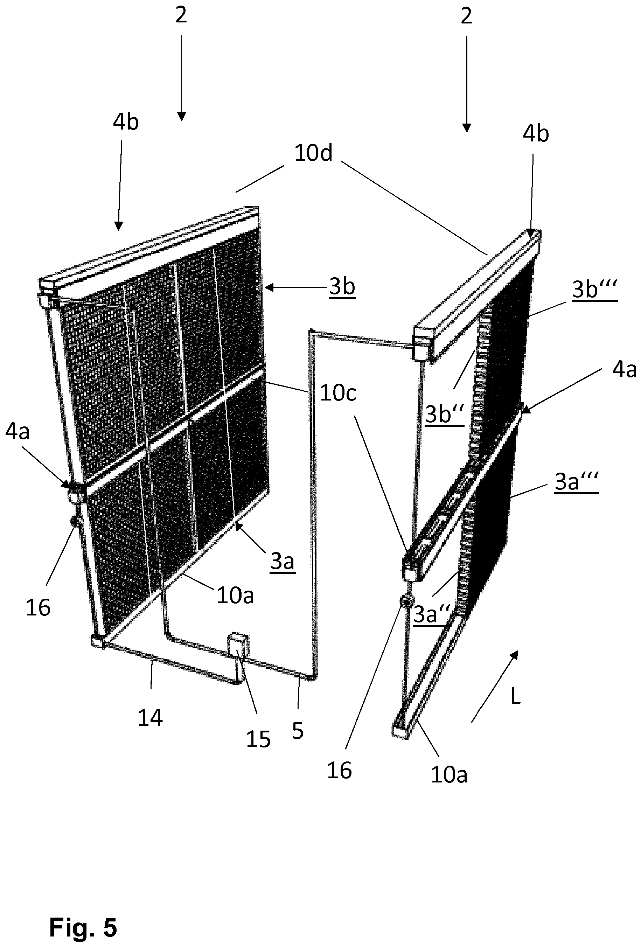

Aus Figur 5 geht die Versorgung der Matten 3a, 3b mittels der jeweils zugeordneten Verteilereinrichtungen 4a, 4b mit der Flüssigkeit hervor. Bei dem in Figur 5 schematisch gezeigten Ausführungsbeispiel sind in der Wärmetauschereinrichtung zwei jeweils gleich aufgebaute Luftkühler 2 gegenüberliegend angeordnet, wobei die den jeweiligen Luftkühlern 2 zugeordneten Wärmeübertrager 1 hier aus Gründen der Übersichtlichkeit nicht dargestellt sind. Jeder Luftkühler 2 enthält ein Luftkühlergehäuse 10 mit jeweils zwei darin vertikal übereinander angeordnete Matten 3a, 3b, wobei jede Matte 3a, 3b jeweils mehrere in Längsrichtung L auf Stoß zueinander angeordnete Mattenabschnitte 3a', 3a", 3a‴ bzw. 3b', 3b", 3b‴ umfasst. Zur Verdeutlichung, dass die Mattenabschnitte dabei einzeln aus dem Luftkühlergehäuse 10 herausnehmbar sind, sind die beiden linken Mattenabschnitte 3a' bzw. 3b' des rechten Luftkühlers 2 herausgenommen dargestellt.

Jeder Matte 3a, 3b ist eine Verteilereinrichtung 4a, 4b zugeordnet, die oberhalb der jeweiligen Matte 3a, 3b in einer Querstrebe 10c, 10d des Luftkühlergehäuse 10 verlaufend angeordnet ist. Jede Verteilereinrichtung 4a, 4b ist an eine Zufuhrleitung 5 angeschlossen, die über eine Pumpe 15 mit einem Reservoir einer Flüssigkeit in Verbindung steht. Die Pumpe 15 pumpt die Flüssigkeit über die Zufuhrleitung 5 in die Verteilereinrichtungen 4a, 4b, welche die Flüssigkeit gleichmäßig auf der Oberseite der ihr zugeordneten Matte 3a, 3b verteilen. Überschüssige Flüssigkeit, die durch die Matten 3a, 3b gelaufen ist, ohne von dem Material der Matten aufgesaugt zu werden, sammelt sich im wannenförmigen Bodenteil 10a des Luftkühlergehäuses 10 und wird von der Pumpe 15 über eine Sammelleitung 14 wieder zurück in die Zufuhrleitung 5 gepumpt. Die im Bodenteil 10a gesammelte Flüssigkeit kann auch über eine Ablassleitung in einen Abwasserkanal gefördert werden. Um eine Entleerung der Zufuhrleitung 5 zu ermöglichen, bspw. für den Winterbetrieb, in dem die Luftkühler nicht eingesetzt werden, sind Entleerungsventile 16 vorgesehen, über die die Flüssigkeit abgelassen werden kann.

Die mittels der oberen Verteilereinrichtung 4b der oberen Matte 3a zugeführte Flüssigkeit strömt gleichmäßig über den Querschnitt der Matte 3a verteilt schwerkraftbedingt nach unten und benetzt dabei das Material der oberen Matte 3a. Die obere Matte 3a wird dabei zweckmäßig leicht mit Flüssigkeit übersättigt, d.h. es wird etwas mehr Flüssigkeit auf die obere Verteilereinrichtung 4b aufgegeben als für eine vollständige Benetzung der oberen Matte 3a erforderlich wäre. Die überschüssige, nicht vom Material der Matte 3a aufgenommene Flüssigkeit fließt aus der Unterseite der oberen Matte 3a heraus und durch die Durchlässe 13 in der mittleren Querstrebe 10c auf die Oberseite der unteren Matte 3b und trägt dadurch zur Benetzung der unteren Matte 3b bei.

Die Verteilereinrichtungen 4a, 4b sind dabei bevorzugt selektiv ansteuerbar. Dadurch kann bspw. der Luftkühler 2 flüssigkeitssparend in Teillast betrieben werden, indem nur die untere Verteilereinrichtung 4a mit Flüssigkeit versorgt wird, so dass nur die untere Matte 3a befeuchtet wird. Durch die selektive Ansteuerung der Verteilereinrichtungen 4a, 4b kann ferner eine Sedimentbildung im Bodenbereich der unteren Matte 3a sowie eine Verkeimung von überschüssiger Flüssigkeit, die im Bodenteil 10a des Luftkühlergehäuses 10 gesammelt wird, verhindert werden.

Eine selektive Ansteuerung der Verteilereinrichtungen 4a, 4b ist auch in Kombination mit einem selektiven Betrieb der Wärmeübertragerabschnitte 1a, 1b von Vorteil, weil bei einem Betrieb der Einrichtung in Teillast, bei der nur einer der beiden Wärmeübertragerabschnitte 1a oder 1b zum Wärmeaustausch betrieben wird, auch nur der zugeordnete Bereich des Luftkühlers 2 mit der zugeordneten Matte 3a bzw. 3b betrieben werden muss.

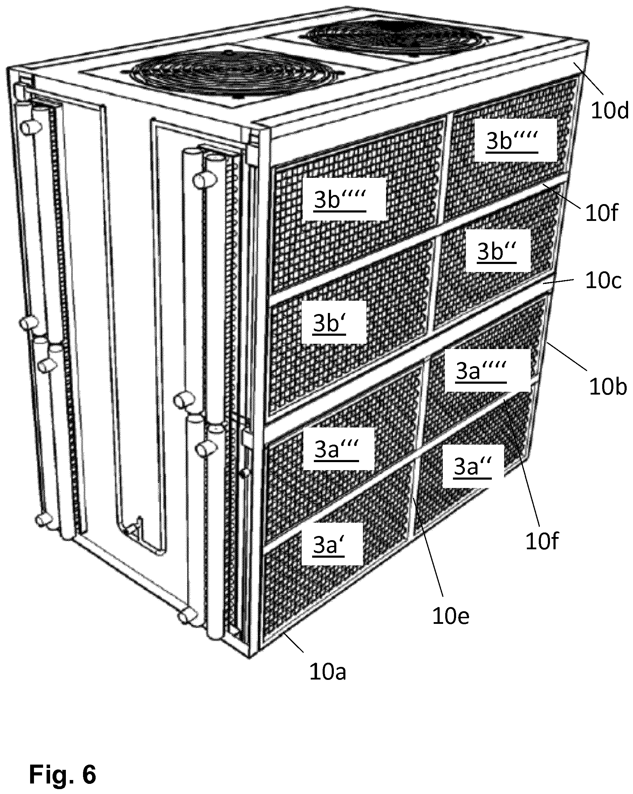

In Figur 6 ist ein Ausführungsbeispiel dargestellt, in dem jede Matte 3a, 3b aus insgesamt vier Mattenabschnitte 3a', 3a", 3a‴, 3aʺʺ bzw. 3b', 3b", 3b‴, 3bʺʺ mit zwei in Längsrichtung L nebeneinander angeordnete und zwei vertikal übereinander angeordnete Abschnitten zusammengesetzt ist. Die nebeneinander liegenden Mattenabschnitte 3a`, 3a" bzw. 3b`, 3b" sind dabei an ihren vertikal stehenden Seitenkanten auf Stoß zueinander angeordnet und durch eine Vertikalstrebe 10e getrennt. Die übereinander liegenden Mattenabschnitte 3a', 3a‴ bzw. 3b', 3b‴ sind dabei an ihren horizontal verlaufenden Kanten ebenfalls auf Stoß zueinander angeordnet und durch eine Horizontalstrebe 10f voneinander getrennt. Es ist jedoch auch möglich, dass die Mattenabschnitte 3a`, 3a", 3a‴, 3aʺʺ bzw. 3b`, 3b", 3b‴, 3bʺʺ an ihren horizontalen und/oder an ihren vertikalen Seitenkanten ohne Zwischenraum auf Stoß aneinander anliegen.

Die erfindungsgemäße Unterteilung des Befeuchtungsmittels 3 des adiabatischen Luftkühlers in wenigstens zwei übereinander angeordnete Matten 3a, 3b ermöglicht den Aufbau hochleistungsfähiger Wärmetauschereinrichtungen im Leistungsbereich von ca. 2 MW oder mehr mit einer Gesamthöhe der Einrichtung von 4m oder mehr. Durch die Unterteilung des Befeuchtungsmittels 3 in zwei oder mehr übereinander angeordnete Matten 3a, 3b sowie durch eine (optionale) zusätzliche Unterteilung der einzelnen Matten 3a, 3b in mehrere Mattenabschnitte, die neben- oder übereinanderliegend auf Stoß zueinander angeordnet werden, bleibt dabei die Handhabbarkeit der Matten, bspw. bei einem Austausch der Matten 3a 3b zu Reinigungszwecken, gewährleistet und es wird durch die Versorgung jeder Matte 3a, 3b mit Flüssigkeit über eine eigens zugeordnete Verteilereinrichtung 4a, 4b für jede Matte 3a, 3b eine gleichmäßige Benetzung des Befeuchtungsmittels sichergestellt. Für eine einfache Handhabung der Matten 3a, 3b ist es vorteilhaft, wenn jede einzelne Matte 3a, 3b oder jeder der Mattenabschnitte nicht höher als 2,5 m und bevorzugt weniger als 2m hoch ist.

Die Erfindung ist nicht auf die hier zeichnerisch dargestellten Ausführungsbeispiele beschränkt. So kann die Anordnung der Wärmeübertrager 1 und der zugeordneten Luftkühler 2 andere Geometrien aufweisen. Insbesondere ist es möglich, die Wärmeübertrager 1 und/oder die Luftkühler 2 schräg zur Vertikalen anzuordnen. Die Anzahl der Wärmeübertrager 1 und der Wärmeübertragerabschnitte 1a, 1b sowie die Anzahl der diesen zugeordneten Luftkühler 2 und Matten 3a, 3b kann ebenso wie die Anzahl der Ventilatoren 11 an die benötigte Leistung der Einrichtung angepasst werden. Dies gilt auch für die Anzahl der Mattenabschnitte, aus denen sich die Matten 3a, 3b zusamensetzen und die neben- oder übereinanderliegend auf Stoß zueinander angeordnet werden können. Desweiteren können die Verteilereinrichtungen 4a, 4b anders ausgestaltet sein als hier beschrieben. So können bspw. auch Berieselungs- oder Sprühanlagen oder Verteilereinrichtungen mit anderen Verteilorganen, wie z.B. Verteilerbleche oder dergleichen eingesetzt werden, um die Matten 3a, 3b mit der Flüssigkeit zu benetzen.

## Patentansprüche

1. Wärmetauschereinrichtung mit
- mindestens zwei von einem Fluid durchflossenen Wärmeübertragern (1), die gegenüberliegend einer Mittellängsebene eines Wärmetauschergehäuses (9) beabstandet voneinander und im Wesentlichen in der Vertikalen oder geneigt zur Vertikalen angeordnet sind und
- zwischen den gegenüberliegenden Wärmeübertragern (1) zumindestens ein Ventilator (11) an der Oberseite des Wärmetauschergehäuses (9) angeordnet ist,
- wobei jedem Wärmeübertrager (1) mindestens ein adiabatischer Luftkühler (2) zugeordnet ist, um die Luft, die von dem zumindest einen Ventilator (11) aus der Umgebung angesaugt wird zu kühlen, wobei die angesaugte Luft zunächst durch den Luftkühler (2), und anschließend durch den Wärmeübertrager (1) geleitet und schließlich durch die Ventilatoren (11) oberseitig aus dem Wärmetauschergehäuse (9) ausgeblasen wird, und jeder adiabatische Luftkühler (2) mindestens ein in dem Luftkühler (2) angeordnetes Befeuchtungsmittel (3) aus einem Feuchtigkeit aufnehmenden Material sowie eine Flüssigkeitszuführung (4) aufweist, welche dem Befeuchtungsmittel (3) eine Flüssigkeit zuführt, um das Befeuchtungsmittel (3) feucht zu halten,
**dadurch gekennzeichnet, dass** das Befeuchtungsmittel (3) wenigstens zwei übereinander angeordnete Matten (3a, 3b) umfasst und dass die Flüssigkeitszuführung (4) eine oberhalb jeder Matte (3a, 3b) angeordnete Verteilereinrichtung (4a, 4b) zur gleichmäßigen Verteilung der Flüssigkeit auf den Matten (3a, 3b) aufweist, welche jeweils an eine Zufuhrleitung (5) angeschlossen ist, über welche die Verteilereinrichtungen (4a, 4b) mit der Flüssigkeit beaufschlagt werden.

2. Wärmetauschereinrichtung nach Anspruch 1, wobei sich die übereinander angeordneten Matten (3a, 3b) entlang einer Ebene erstrecken und in der Ebene verlaufend miteinander fluchten.

3. Wärmetauschereinrichtung nach Anspruch 1 oder 2, **dadurch gekennzeichnet, dass** jede Verteilereinrichtung (4a, 4b) ein Verteilerorgan umfasst, das die Flüssigkeit gleichmäßig auf eine Oberseite der der jeweiligen Verteilereinrichtung (4a, 4b) zugeordneten Matte (3a, 3b) verteilt, wobei die Verteilereinrichtungen (4a, 4b) bevorzugt als flüssigkeitsdurchlässige, die Flüssigkeit führende Rohr- oder Schlauchleitungen ausgebildet sind, insbesondere in Form eines Perlschlauchs aus einem porösen Material oder in Form einer Rohrleitung mit einer Mehrzahl von Öffnungen oder Düsen.

4. Wärmetauschereinrichtung nach einem der voranstehenden Ansprüche, **gekennzeichnet durch** ein Luftkühlergehäuse (10), in dem die Matten (3a, 3b) austauschbar angeordnet sind, wobei insbesondere jede Matte (3a, 3b) separat aus dem Luftkühler (2) herausnehmbar ist.

5. Wärmetauschereinrichtung nach Anspruch 4, **dadurch gekennzeichnet, dass** das Luftkühlergehäuse (10) ein als Sammeleinrichtung ausgebildetes Bodenteil (10a) sowie mindestens zwei Seitenteile (10b) und mindestens zwei Querstreben (10c, 10d) aufweist, wobei sich die Querstreben (10c, 10d) in Längsrichtung (L) der Wärmetauschereinrichtung erstrecken.

6. Wärmetauschereinrichtung nach Anspruch 5, wobei sich zwischen dem Bodenteil (10a) und einer ersten Querstrebe (10c) eine erste Matte (3a) und zwischen der ersten Querstrebe (10c) und einer zweiten Querstrebe (10d) eine zweite Matte (3b) erstreckt.

7. Wärmetauschereinrichtung nach einem der Ansprüche 5 oder 6, **dadurch gekennzeichnet, dass** in der ersten Querstrebe (10c) eine erste Verteilereinrichtung (4a) zur Befeuchtung der ihr zugeordneten ersten Matte (3a) angeordnet ist und/oder dass in der zweiten Querstrebe (10d) eine zweite Verteilereinrichtung (4b) zur Befeuchtung der ihr zugeordneten zweiten Matte (3b) angeordnet ist.

8. Wärmetauschereinrichtung nach einem der Ansprüche 5 bis 7, **dadurch gekennzeichnet, dass** die erste Querstrebe (10c) einen Boden und einen im Abstand und parallel zum Boden verlaufenden Deckel aufweist, wobei die erste Verteilereinrichtung (4a) zwischen dem Boden und dem Deckel angeordnet ist und sowohl im Boden als auch im Deckel Durchlässe (13) angeordnet sind, durch die Flüssigkeit hindurchtreten kann.

9. Wärmetauschereinrichtung nach einem der voranstehenden Ansprüche, **dadurch gekennzeichnet, dass** in der Zufuhrleitung (5) wenigstens ein Ventil (16) angeordnet ist, über welches die in der Zufuhrleitung stehende Flüssigkeit abgelassen werden kann.

10. Wärmetauschereinrichtung nach einem der Ansprüche 5 bis 9, wobei jede Querstrebe (10c, 10d) zumindest einen im Querschnitt U-förmig ausgebildeten Aufnahmebereich zur Aufnahme einer Unterseite und/oder einer Oberseite einer Matte (3a, 3b) aufweist.

11. Wärmetauschereinrichtung nach einem der Ansprüche 5 bis 10, wobei wenigstens eine und insbesondere jede Querstrebe (10c, 10d) zumindest einen Durchlass, bevorzugt eine Mehrzahl von Durchlässen (13) aufweist, durch welche die Flüssigkeit auf die darunter angeordnete Matte (3a) gelangen kann.

12. Wärmetauschereinrichtung nach einem der voranstehenden Ansprüche, **dadurch gekennzeichnet, dass** jede Verteilereinrichtung (4a, 4b) über einen Verteiler (12) mit der Zufuhrleitung (5) verbunden ist.

13. Wärmetauschereinrichtung nach einem der voranstehenden Ansprüche, wobei die Zufuhrleitung (5) mit einer Pumpe (15) gekoppelt ist, über welche die unter Druck stehende Flüssigkeit über die Zufuhrleitung (5) zu den Verteilereinrichtungen (4a, 4b) geleitet wird.

14. Wärmetauschereinrichtung nach einem der voranstehenden Ansprüche, **dadurch gekennzeichnet, dass** sich wenigstens eine Matte (3a, 3b) aus mehreren Mattenabschnitten (3a', 3a", 3a") zusammensetzt, wobei die Mattenabschnitte (3a', 3a", 3a") in der Ebene verlaufend in Längsrichtung (L) des Luftkühlers (2) auf Stoß nebeneinander und/oder senkrecht zur Längsrichtung (L) übereinander angeordnet sind und jeder Mattenabschnitt (3', 3", 3‴) separat aus dem Luftkühler (2) herausnehmbar ist.

15. Wärmetauschereinrichtung nach einem der voranstehenden Ansprüche, **dadurch gekennzeichnet, dass** jeder Wärmeübertrager (1) in wenigstens zwei vertikal übereinander angeordnete Wärmeübertragerabschnitte (1a, 1b) unterteilt ist, wobei die Wärmeübertragerabschnitte (1a, 1b) voneinander getrennte Rohrleitungssysteme aufweisen, durch welche das als Kühlmittel oder Kältemittel ausgebildete Fluid strömt, das mit der durch den Wärmeübertrager (1) geleiteten Luft im Wärmeaustausch steht.

16. Wärmetauschereinrichtung nach Anspruch 15, wobei jedem Wärmeübertragerabschnitt (1a, 1b) eine Matte (3a, 3b) derart zugeordnet ist, dass die vom Ventilator (11) aus der Umgebung angesaugte Luft zunächst durch die jeweilige Matte (3a, 3b) und anschließend durch den ihr zugeordneten Wärmeübertragerabschnitt (1a, 1b) strömt.

## Claims

1. Heat exchanger device with
- at least two heat exchangers (1) through which a fluid flows and which are arranged opposite a central longitudinal plane of a heat exchanger housing (9) at a distance from one another and substantially in the vertical or inclined to the vertical, and
- at least one fan (11) arranged between the opposing heat exchangers (1) on the upper side of the heat exchanger housing (9),
- wherein at least one adiabatic air cooler (2) is associated with each heat exchanger (1) in order to cool the air which is sucked in from the environment by the at least one fan (11), wherein the sucked-in air is first conducted through the air cooler (2) and then through the heat exchanger (1) and finally blown out of the heat exchanger housing (9) at the top by the fans (11), and each adiabatic air cooler (2) comprises at least one humidifying means (3) of a moisture-absorbing material arranged in the air cooler (2) and a liquid supply (4) which supplies a liquid to the humidifying means (3) in order to keep the humidifying means (3) moist,
**characterised in that** the moistening means (3) comprises at least two mats (3a, 3b) arranged one above the other and **in that** the liquid supply (4) has a distributor device (4a, 4b) arranged above each mat (3a, 3b) for uniform distribution of the liquid on the mats (3a, 3b), which distributor device is connected in each case to a supply line (5) via which the distributor devices (4a, 4b) are supplied with the liquid.

2. Heat exchanger device according to claim 1, wherein the superimposed mats (3a, 3b) extend along a plane and are aligned with each other extending in the plane.

3. Heat exchanger device according to claim 1 or 2, **characterised in that** each distributor device (4a, 4b) comprises a distributor member which distributes the liquid uniformly onto an upper side of the mat (3a, 3b) associated with the respective distributor device (4a, 4b), the distributor devices (4a, 4b) preferably being designed as liquid-permeable pipe or hose lines carrying the liquid, in particular in the form of a beaded hose made of a porous material or in the form of a pipe line with a plurality of openings or nozzles.

4. Heat exchanger device according to one of the preceding claims, **characterised by** an air cooler housing (10) in which the mats (3a, 3b) are interchangeably arranged, wherein in particular each mat (3a, 3b) is separately removable from the air cooler (2).

5. Heat exchanger device according to claim 4, **characterized in that** the air cooler housing (10) comprises a bottom part (10a) formed as a collecting device as well as at least two side parts (10b) and at least two cross struts (10c, 10d), wherein the cross struts (10c, 10d) extend in the longitudinal direction (L) of the heat exchanger device.

6. Heat exchanger device according to claim 5, wherein a first mat (3a) extends between the bottom part (10a) and a first cross strut (10c) and a second mat (3b) extends between the first cross strut (10c) and a second cross strut (10d).

7. Heat exchanger device according to one of claims 5 or 6, **characterised in that** a first distributor device (4a) for moistening the first mat (3a) associated therewith is arranged in the first transverse strut (10c) and/or **in that** a second distributor device (4b) for moistening the second mat (3b) associated therewith is arranged in the second transverse strut (10d).

8. A heat exchanger device according to any one of claims 5 to 7, **characterised in that** the first cross member (10c) comprises a base and a cover spaced from and running parallel to the base, the first manifold means (4a) being disposed between the base and the cover, and passages (13) being disposed in both the base and the cover through which liquid can pass.

9. Heat exchanger device according to one of the preceding claims, **characterised in that** at least one valve (16) is arranged in the supply line (5), via which the liquid standing in the supply line can be drained off.

10. Heat exchanger device according to any one of claims 5 to 9, wherein each transverse strut (10c, 10d) has at least one receiving section of U-shaped cross-section for receiving an underside and/or an upper side of a mat (3a, 3b).

11. Heat exchanger device according to any one of claims 5 to 10, wherein at least one and in particular each transverse strut (10c, 10d) has at least one passage, preferably a plurality of passages (13), through which the liquid can pass onto the mat (3a) arranged thereunder.

12. Heat exchanger device according to one of the preceding claims, **characterised in that** each distributor device (4a, 4b) is connected to the supply line (5) via a distributor (12).

13. Heat exchanger device according to any one of the preceding claims, wherein the supply line (5) is coupled to a pump (15) via which the pressurised liquid is conducted to the distributor devices (4a, 4b) via the supply line (5).

14. Heat exchanger device according to one of the preceding claims, **characterized in that** at least one mat (3a, 3b) is composed of several mat sections (3a', 3a", 3a"), whereby the mat sections (3a', 3a", 3a", 3a") are arranged in the plane running in the longitudinal direction (L) of the air cooler (2) abutting next to one another and/or perpendicular to the longitudinal direction (L) one above the other and each mat section (3', 3", 3‴) can be removed separately from the air cooler (2).

15. Heat exchanger device according to one of the preceding claims, **characterised in that** each heat exchanger (1) is subdivided into at least two heat exchanger sections (1a, 1b) arranged vertically one above the other, whereby the heat exchanger sections (1a, 1b) have pipe systems which are separate from one another and through which the fluid, which is in the form of a coolant or refrigerant and which is in heat exchange with the air passed through the heat exchanger (1), is flowing.

16. Heat exchanger device according to claim 15, wherein a mat (3a, 3b) is associated with each heat exchanger section (1a, 1b) in such a way that the air drawn in from the environment by the fan (11) first flows through the respective mat (3a, 3b) and then through the heat exchanger section (1a, 1b) associated therewith.

## Revendications

1. Dispositif échangeur de chaleur avec
- au moins deux échangeurs de chaleur (1) parcourus par un fluide, qui sont agencés à l'opposé d'un plan médian longitudinal d'un boîtier d'échangeur de chaleur (9) à distance l'un de l'autre et sensiblement à la verticale ou de manière inclinée par rapport à la verticale et
- entre les échangeurs de chaleur (1) opposés, au moins un ventilateur (11) est agencé au niveau du côté supérieur du boîtier d'échangeur de chaleur (9),
- dans lequel au moins un refroidisseur d'air (2) adiabatique est associé à chaque échangeur de chaleur (1) afin de refroidir l'air qui est aspiré par l'au moins un ventilateur (11) depuis l'environnement, dans lequel l'air aspiré est conduit tout d'abord par le refroidisseur d'air (2), et ensuite par l'échangeur de chaleur (1) et est finalement soufflé par les ventilateurs (11) côté supérieur depuis le boîtier d'échangeur de chaleur (9), et chaque refroidisseur d'air (2) adiabatique présente au moins un moyen d'humidification (3) agencé dans le refroidisseur d'air (2) en un matériau recevant de l'humidité ainsi qu'une alimentation de liquide (4) qui amène un liquide au moyen d'humification (3) afin de maintenir humide le moyen d'humidification (3),
**caractérisé en ce que** le moyen d'humification (3) comporte au moins deux tapis (3a, 3b) agencés l'un au-dessus de l'autre et que l'alimentation de liquide (4) présente un dispositif de distribution (4a, 4b) agencé au-dessus de chaque tapis (3a, 3b) pour la distribution uniforme du liquide sur les tapis (3a, 3b) qui est raccordé respectivement à une conduite d'alimentation (5), par le biais de laquelle les dispositifs de distribution (4a, 4b) sont alimentés en liquide.

2. Dispositif échangeur de chaleur selon la revendication 1, dans lequel les tapis (3a, 3b) agencés l'un au-dessus de l'autre s'étendent le long d'un plan et s'alignent en s'étendant dans le plan l'un sur l'autre.

3. Dispositif échangeur de chaleur selon la revendication 1 ou 2, **caractérisé en ce que** chaque dispositif de distribution (4a, 4b) comporte un organe de distribution qui distribue le liquide uniformément sur un côté supérieur du tapis (3a, 3b) associé au dispositif de distribution (4a, 4b) respectif, dans lequel les dispositifs de distribution (4a, 4b) sont réalisés de préférence comme conduites de tube ou de tuyau perméables au liquide, acheminant le liquide, en particulier sous la forme d'un tuyau perlé en un matériau poreux ou sous la forme d'une conduite tubulaire avec une pluralité d'ouvertures ou de buses.

4. Dispositif échangeur de chaleur selon l'une quelconque des revendications précédentes, **caractérisé par** un boîtier de refroidisseur d'air (10), dans lequel les tapis (3a, 3b) sont agencés de manière interchangeable, dans lequel en particulier chaque tapis (3a, 3b) peut être retiré séparément du refroidisseur d'air (2).

5. Dispositif échangeur de chaleur selon la revendication 4, **caractérisé en ce que** le boîtier de refroidisseur d'air (10) présente une partie de fond (10a) réalisée comme dispositif de collecte ainsi qu'au moins deux parties latérales (10b) et au moins deux barres transversales (10c, 10d), dans lequel les barres transversales (10c, 10d) s'étendent dans le sens longitudinal (L) du dispositif échangeur de chaleur.

6. Dispositif échangeur de chaleur selon la revendication 5, dans lequel un premier tapis (3a) s'étend entre la partie de fond (10a) et une première barre transversale (10c) et un second tapis (3b) s'étend entre la première barre transversale (10c) et une seconde barre transversale (10d).

7. Dispositif échangeur de chaleur selon l'une quelconque des revendications 5 ou 6, **caractérisé en ce que** dans la première barre transversale (10c), un premier dispositif de distribution (4a) est agencé pour l'humification du premier tapis (3a) qui lui est associé et/ou que dans la seconde barre transversale (10d), un second dispositif de distribution (4b) est agencé pour l'humidification du second tapis (3b) qui lui est associé.

8. Dispositif échangeur de chaleur selon l'une quelconque des revendications 5 à 7, **caractérisé en ce que** la première barre transversale (10c) présente un fond et un couvercle s'étendant à distance et parallèlement au fond, dans lequel le premier dispositif de distribution (4a) est agencé entre le fond et le couvercle et des perçages (13) sont agencés non seulement dans le fond mais aussi dans le couvercle, à travers lesquels du liquide peut passer.

9. Dispositif échangeur de chaleur selon l'une quelconque des revendications précédentes, **caractérisé en ce qu'**au moins une soupape (16) est agencée dans la conduite d'alimentation (5), par le biais de laquelle le liquide se trouvant dans la conduite d'alimentation peut être évacué.

10. Dispositif échangeur de chaleur selon l'une quelconque des revendications 5 à 9, dans lequel chaque barre transversale (10c, 10d) présente au moins une zone de réception réalisée en section transversale en forme de U pour la réception d'un côté inférieur et/ou d'un côté supérieur d'un tapis (3a, 3b).

11. Dispositif échangeur de chaleur selon l'une quelconque des revendications 5 à 10, dans lequel au moins une et en particulier chaque barre transversale (10c, 10d) présente au moins un perçage, de préférence une pluralité de perçages (13), par lesquels le liquide peut parvenir sur le tapis (3a) agencé dessous.

12. Dispositif échangeur de chaleur selon l'une quelconque des revendications précédentes, **caractérisé en ce que** chaque dispositif de distribution (4a, 4b) est relié par le biais d'un distributeur (12) à la conduite d'alimentation (5).

13. Dispositif échangeur de chaleur selon l'une quelconque des revendications précédentes, dans lequel la conduite d'alimentation (5) est couplée à une pompe (15), par le biais de laquelle le liquide se trouvant sous pression est conduit par la conduite d'alimentation (5) aux dispositifs de distribution (4a, 4b) .

14. Dispositif échangeur de chaleur selon l'une quelconque des revendications précédentes, **caractérisé en ce qu'**au moins un tapis (3a, 3b) se compose de plusieurs sections de tapis (3a', 3a'', 3a''), dans lequel les sections de tapis (3a', 3a'', 3a'') sont agencées s'étendant dans le plan dans le sens longitudinal (L) du refroidisseur d'air (2) bout à bout l'une à côté de l'autre et/ou perpendiculairement au sens longitudinal (L) l'une au-dessus de l'autre et chaque section de tapis (3', 3", 3‴) peut être retirée séparément du refroidisseur d'air (2).

15. Dispositif échangeur de chaleur selon l'une quelconque des revendications précédentes, **caractérisé en ce que** chaque échangeur de chaleur (1) est divisé en au moins deux sections d'échangeur de chaleur (1a, 1b) agencées verticalement l'une au-dessus de l'autre, dans lequel les sections d'échangeur de chaleur (1a, 1b) présentent des systèmes de conduite tubulaire séparés l'un de l'autre, par lesquels le fluide réalisé en tant que moyen de refroidissement ou de réfrigération s'écoule, lequel est en échange thermique avec l'air conduit par l'échangeur de chaleur (1).

16. Dispositif échangeur de chaleur selon la revendication 15, dans lequel un tapis (3a, 3b) est associé à chaque section d'échangeur de chaleur (1a, 1b) de telle manière que l'air aspiré par le ventilateur (11) depuis l'environnement s'écoule tout d'abord par le tapis (3a, 3b) respectif et ensuite par la section d'échangeur de chaleur (1a, 1b) qui lui est associée.
